# EUROPEAN PATENT SPECIFICATION

(11) **EP 1 518 027 B1**
(45) Date of publication and mention of the grant of the patent: **18.01.2006**
(21) Application number: 03740870.5
(22) Date of filing: 01.07.2003
(51) Int. Cl.: E02D 1/02, E02D 3/02, G01N 3/303

(54) **DROP MASS COMPACTION OF SOIL**
FALLGEWICHTVERDICHTUNG
COMPACTAGE DE TERRAINS AU MOYEN D'UNE MASSE DE CHUTE

(30) Priority: 01.07.2002 ZA 200205257
(43) Date of publication of application: 30.03.2005
(73) Proprietor: Compaction Technology (Soil) Limited, Harrow, Middlesex HA2 7HH (GB)
(72) Inventor: COOK, Eric, Johnstone, 1491 Ferryvale (ZA)
(74) Representative: Gill, David Alan
(86) International application number: PCT/IB2003/002578
(87) International publication number: WO 2004/003301

(56) References cited:
- WO-A-00/28154
- GB-A- 2 366 819
- US-A- 5 736 631
- US-A- 6 061 618

## Description

### BACKGROUND TO THE INVENTION

This invention relates to a method and apparatus for achieving drop mass soil compaction and for monitoring soil properties.

There are numerous applications where it is necessary to compact a relatively small area of soil but where the use of conventional soil compaction machinery, typically employing rollers of one type or another, is inappropriate. One important example is in the compaction of soil adjacent bridge abutments, where limited space makes it impossible to compact with conventional large rollers or other machines. Another example is in the compaction of soil in relatively narrow trenches for pipes, strip foundations or the like. Yet another example is in road maintenance where local failure of a section of a road may have taken place in a relatively small area.

Although small vibratory rollers and impactors are available and are widely used in such applications, the level of soil compaction and the depth of compaction influence which can be achieved with such devices is limited. The result is often that undue settlement and or structural failure can take place after a relatively short period of time.

It has been proposed to use drop mass soil compaction to achieve compaction of soil in the kind of situations envisaged above. In drop mass compaction, a substantial mass is repeatedly raised and dropped to apply impacts to the soil surface for the purposes of compacting it. For more detail about one known drop mass soil compactor, reference may for instance be made to WO 00/28154.

Although the principles of drop mass soil compaction are sound, it is felt that greater control over the compaction process is required to enable this type of compaction technology to achieve its full potential.

GB-A-2 366 819 discloses a method and apparatus for monitoring the degree of compaction during ground treatment.

### SUMMARY OF THE INVENTION

According to one aspect of the present invention as defined by appended claim 1, there is provided a method of compacting soil, the method comprising the steps of repeatedly raising a mass above the soil surface and then dropping it to apply impacts to the soil surface, from the impacts on the soil surface periodically deriving indications of one or more instantaneous properties of the soil, and controlling the number of subsequent impacts and/or the energy imparted to the soil at each impact and/or the frequency of the impacts, in accordance with the indicated property or properties, in order to achieve in the soil one or more predetermined properties.

The instantaneous properties for indications are periodically derived may include, for instance, mechanical properties such as the stiffness or strength of the soil or the bearing capacity thereof. Alternatively, indications may periodically be derived for a property such as total or incremental soil settlement.

A control means is used to vary one or more of the above parameters automatically to achieve the predetermined mechanical property or properties The control means comprises a PLC (programmable logic controller) which is pre-programmed with one or more predetermined mechanical properties which is or are to be attained.

A sensor is associated with the mass to provide the necessary indications, the output of the sensor being fed to the control means. This sensor may for instance be an accelerometer which is arranged to monitor the deceleration of the mass at each impact and which is arranged to output signals related to, for instance, the instantaneous stiffness of the soil to the control means.

According to another aspect of the invention as defined by appended claim 6, there is provided a soil compaction apparatus comprising
- a drop mass soil compactor including a mass and means for repeatedly raising the mass above the soil surface and then dropping it to apply impacts to the soil surface;
- monitoring means arranged to provide periodic indications of one or more instantaneous properties of the soil; and
- control means responsive to the indications provided by the monitoring means to control the number of subsequent impacts and/or the energy imparted to the soil at each impact and/or the frequency of the impacts, thereby to achieve in the soil one or more predetermined soil properties.

As indicated previously, the control means comprises a PLC which is pre-programmed with one or more predetermined soil properties which it is desired to achieve and which is arranged to control one or more of the variable parameters listed above.

The apparatus of the invention may also include a position monitor, typically a global positioning system, which is interfaced with the control means to enable the control means to exercise control over the compaction of soil in accordance with a geographical plan.

The apparatus of the invention may be vehicle mounted and may be movable from a transportation orientation in which it is carried on the vehicle to an operative position in which it is located alongside the vehicle.

### BRIEF DESCRIPTION OF THE DRAWINGS

The invention will now be described in more detail, by way of example only, with reference to the accompanying drawings in which:
- **Figure 1**: shows a side view of a vehicle mounted drop mass soil compaction apparatus according to this invention, the apparatus being at an operative orientation; and

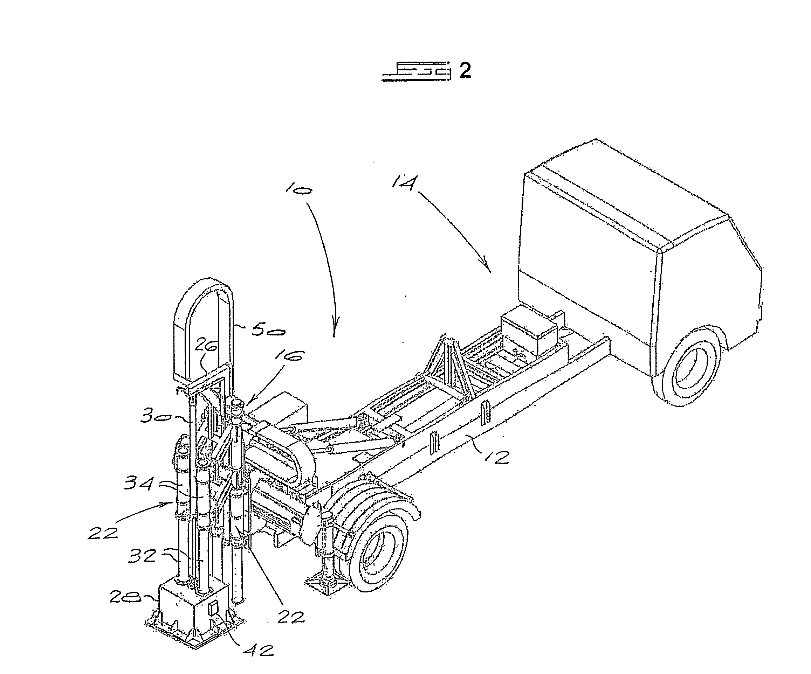

- **Figure 2**: shows a perspective view of the apparatus seen in Figure 1.

### SPECIFIC DESCRIPTION

The drawings illustrate a drop mass soil compaction apparatus 10 according to this invention. In this embodiment, the apparatus 10 is mounted on the chassis 12 of a truck 14, but it will be understood that the apparatus could equally well be mounted on a wheeled trailer chassis drawn by a truck or tractor, or on a track-type self-driven vehicle or trailer.

The apparatus 10 includes a frame 16 mounted for side to side traversing movement on a laterally extending traverse beam 18 which is pivoted to the rear end of the truck 14 at a pivot point 20. The frame 16 includes a pair of upright support members 22 supporting a rearwardly directed suspension member 26. The rearward end of the member 26 is located vertically above a compaction mass 28 and an hydraulic cylinder 30 acts between the suspension member 26 and the mass as illustrated. Extending vertically from the mass are guide rods 32 which slide in guide cylinders 34 connected to the members 22 by inclined braces 35.

A bracket 36 connected to the support members 22 is engaged in slidable manner with the traverse beam 18 in order to achieve the side to side traversing movement of the frame as mentioned above. The apparatus includes a drive (not shown) for driving the frame 16 from side to side. The drive could take any one of a number of conventional forms. It may, for instance, be a chain and sprocket drive, at least some components of which are mounted within the bracket 36, and/or the traverse beam 18.

The drop mass soil compactor is shown at an operative orientation with the mass 28 resting on the ground. The compactor will operate at this orientation during soil compaction activities. When the compactor is to be transported from one location to another, hydraulic cylinders 38 acting between lugs 40 extending from the traverse beam 18 and the chassis 12 are contracted to pivot the frame 16 to a prone, generally horizontal orientation on the chassis.

In use, soil beneath the mass 28 is compacted by repeatedly lifting the mass, by contracting the cylinder 30, and then dropping the mass to apply impacts to the soil surface.

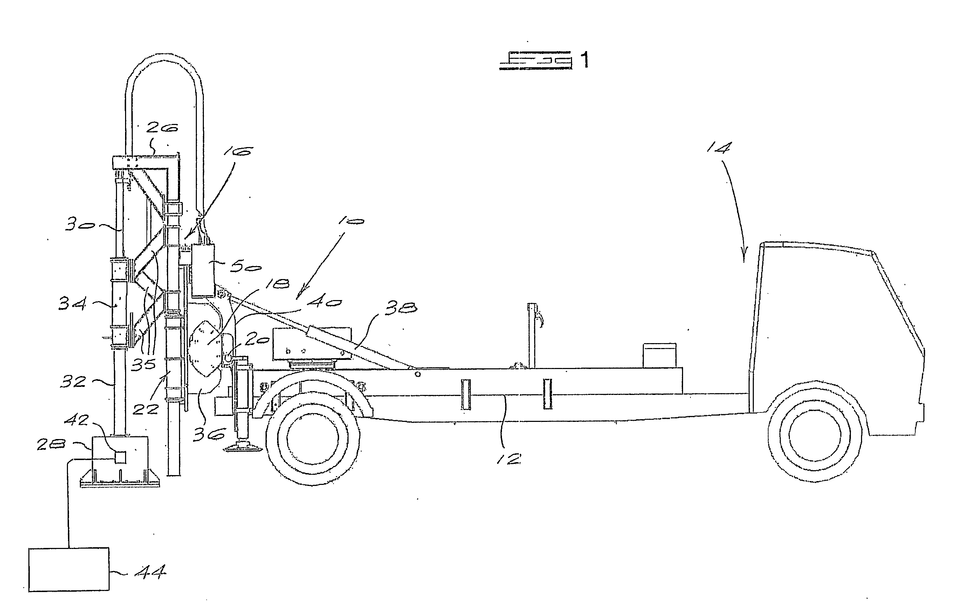

Attached to the mass 28 is an accelerometer 42, the output of which is fed to a PLC 44. The PLC is shown diagrammatically in Figure 1 as a remote component, but it will be understood that in practice the PLC and other ancillary equipment will form an integral part of the apparatus itself.

As the mass impacts on the soil, the deceleration which it undergoes, as measured by the accelerometer, provides an indication of the instantaneous stiffness of the soil, and this in turn provides a reliable, real time indication of the level of compaction of the soil. In this example the PLC is pre-programmed for the apparatus to achieve in the soil a predetermined level of soil stiffness. The PLC in turn automatically controls various parameters of the compaction operation. For instance, the PLC may control the impact energy applied to the soil at each impact. This is achieved by varying the height to which the mass is raised prior to each blow, and accordingly the potential energy which is stored and which is available for delivery to the soil, by controlling the hydraulic operation of the cylinder 30 and/or by means of appropriate mass position sensors to sense the position of the mass.

By way of example, the impact energy which is applied may be controlled by the PLC to have the same value for a number of impacts, then a different value for a succeeding series of impacts, and so on. Alternatively, the impact energy may be varied from impact to impact or the same energy level may be maintained throughout the compaction operation.

The PLC may also control, in accordance with its programme, the number of blows applied to the soil. As yet another possibility, the PLC may control the frequency of the impacts, in this case by varying the duration of each impact cycle and/or by varying the time lapse between cycles. Although not specifically mentioned, other variable parameters may also be controlled instantaneously by the PLC.

In the drawings, the numeral 50 indicates a flexible cable tray which carries signal transmitting wiring and/or hydraulic hoses for the cylinder 30 and its ancillary equipment such as hydraulic pumps and so on. It will also be understood that in practice an hydraulic power pack (not illustrated) will be mounted on the chassis.

In practice, the soil compaction apparatus described above may be used to compact soil at various locations on a site, or to compact the entire site. It will be understood that the vehicle can be driven from one location to another on the site to enable the soil compaction apparatus to be used to compact different regions of the site. At each stationary location of the vehicle, the apparatus can be used to compact a limited strip of soil, this being permitted by the ability of the frame 16 to traverse from side to side on the traverse beam 18 and the manoeuvrability of the vehicle.

The soil compaction apparatus described above can also be interfaced with a positioning system, typically a GPS (global positioning system), so that indications of soil stiffness can be correlated with geographical position. This in turn enables a site plan to be derived which gives real time information related to the levels of soil compaction at different locations on the site. It will be understood that integrated information regarding geographical position and level of soil compaction can be stored digitally and/or represented graphically to provide a substantially complete analysis of the state of soil compaction across a site or selected regions thereof.

Although mention has been made of compacting soil regions over a site, the principles of the invention are equally applicable to compaction of single, small areas where a specific level of compaction is required. A typical example here would be soil compaction adjacent a fixed structure such as a bridge abutment or building.

Also, although specific mention has been made of monitoring soil stiffness and of varying the operating parameters to achieve a desired level of soil stiffness, it is within the scope of the invenion for the apparatus to monitor a variety of other soil properties and to control the operating parameters to achieve one or more specific, desired properties. The apparatus could be arranged to monitor any one or more of a number of other mechanical soil properties other than stiffness, for instance soil strength and/or bearing capacity, and to control the operating parameters to achieve desired properties. Still further the apparatus could be arranged to monitor a soil property such as total soil settlement at each point in time or incremental soil settlement, i.e. the amount of soil settlement in a given period of time or as a result of one or more impact blows.

Instead of an accelerometer to monitor any particular soil property, in the above example the soil stiffness, any other suitable form of sensor could also be used. Other viable forms of sensor include a velocity sensor to measure the velocity of the mass during impact, a displacement sensor such as a displacement transducer to measure soil settlement or a force or pressure transducer to measure the force or pressure applied to the soil surface by the mass at impact.

As mentioned previously, the principles of the invention can be used not only to achieve and control soil compaction, but also to measure instantaneous soil properties on a site. In this role, the apparatus described above may be arranged to raise and drop the mass 28 only once at each location on the site where a measurement of instantaneous soil properties is required. The monitoring equipment, including the accelerometer and/or transducers described above, are then arranged to provide, at each such location, a measurement of a selected soil property, such as stiffness, settlement and so on. As in the case of the apparatus described above, the apparatus in this role may be interfaced with a geographical positioning system such as a GPS, thereby to provide soil property measurements for different site locations. The information obtained in this way may, with appropriate signal processing equipment and associated software, be presented in the form of a map, contoured or otherwise, or in tabular form. This application may for instance be employed by soils engineers to assist them in performing site certification functions.

## Claims

1. A method of compacting soil, the method comprising the steps of repeatedly raising a mass above the soil surface and then dropping it to apply impacts to the soll surface, from the impacts on the soil surface periodically deriving indications of one or more instantaneous properties of the soil, and controlling the number of subsequent impacts and/or the energy imparted to the soil at each impact and/or the frequency of the impacts, in accordance with the indicated property or properties, wherein a sensor (42) is associated with the mass to provide the periodic indications and the output of the sensor is fed to a control means comprising a PLC (44), pre-programmed with one or more predetermined soil properties which is or are to be attained, the PLC operating automatically to vary one or more of the number of impacts and/or the energy imparted to the soil at each impact and/or the frequency of the impacts to achieve the predetermined soil property or properties.

2. A method according to claim 1 wherein indications are periodically derived of instantaneous mechanical of physical properties of the soil.

3. A method according to claim 2 wherein the mechanical properties of the soil include one or more of the stiffness of the soil, strength of the soil or the bearing capacity of the soil.

4. A method according to claim 1 wherein indications are periodically derived of total or incremental soil settlement.

5. A method according to any one of the preceding claims wherein the sensor (42) is an accelerometer associated with the mass and arranged to output signals related to the deceleration of the mass at each impact to the PLC (44).

6. A soil compaction apparatus comprising a drop mass soil compactor including a mass (28) and means for repeatedly raising the mass above the soil surface and then dropping it to apply impacts to the soil surface; **characterised in that** the apparatus also comprises a control means in the form of a PLC (44) which is pre-programmed with one or more predetermined soil properties which it is desired to achieve and a sensor (42) associated with the mass to provide periodic indications of one or more instantaneous properties of the soil, the PLC being arranged to respond to the indications provided by the sensor and to control the number of subsequent impacts and/or the energy imparted to the soil at each impact and/or the frequency of the impacts, thereby to achieve in the soil the one or more predetermined soil properties.

7. An apparatus according to claim 6 and also comprising a geographical position monitor which is interfaced with the PLC (44) to enable the control means to exercise control over the compaction of soil in accordance with a geographical plan.

8. An apparatus according to claim 7 wherein the geographical position monitor is a global positioning system.

9. An apparatus according to claim any one of claims 5 to 8 wherein the sensor (42) is an accelerometer arranged to output signals related to the deceleration of the mass at each impact to the PLC (44).

10. An apparatus according to any one of claims 6 to 9 which is vehicle mounted.

11. An apparatus according to claim 10 wherein the apparatus is movable from a transportation orientation in which it is carried on the vehicle to an operative position in which it is located alongside the vehicle.

## Patentansprüche

1. Verfahren für das Verdichten von Boden, wobei das Verfahren folgende Schritte umfasst: das wiederholte Anheben einer Masse über der Bodenoberfläche und dann deren Fallenlassen, um Stöße auf die Bodenoberfläche auszuüben, wobei von den Stößen auf die Bodenoberfläche regelmäßig Hinweise auf eine oder mehrere momentane Eigenschaften des Bodens abgeleitet werden, sowie Steuern der Anzahl nachfolgender Stöße und/oder der bei jedem Stoß auf den Boden ausgeübten Energie und/oder der Häufigkeit der Stöße gemäß der angezeigten Eigenschaft bzw. den angezeigten Eigenschaften, wobei der Masse ein Sensor (42) zugeordnet ist, um die regelmäßigen Hinweise zu liefern, und die Ausgabe des Sensors einem Steuermittel übermittelt wird, das eine programmierbare Verknüpfungssteuerung (44) umfasst, die mit einer oder mit mehreren zu erreichenden vorbestimmten Bodeneigenschaften vorprogrammiert ist, wobei die programmierbare Verknupfungssteuerung so arbeitet, dass sie automatisch einen oder mehrere der Anzahl von Stößen und/oder die bei jedem Stoß auf den Boden ausgeübte Energie und/oder die Häufigkeit der Stöße zur Verwirklichung der vorbestimmten Bodeneigenschaft bzw. Bodeneigenschaften verändert.

2. Verfahren nach Anspruch 1, **dadurch gekennzeichnet, dass** die Hinweise regelmäßig von momentanen mechanischen oder physikalischen Eigenschaften des Bodens abgeleitet werden.

3. Verfahren nach Anspruch 2, **dadurch gekennzeichnet, dass** die mechanischen Eigenschaften des Bodens eines oder mehrere von Steifheit des Bodens, Stabilität des Bodens oder Tragfähigkeit des Bodens umfassen.

4. Verfahren nach Anspruch 1, **dadurch gekennzeichnet, dass** die Hinweise regelmäßig aus einem gesamten oder schrittweisen Setzen des Bodens abgeleitet werden.

5. Verfahren nach einem der vorhergehenden Ansprüche, **dadurch gekennzeichnet, dass** der Sensor (42) ein der Masse zugeordneter und so ausgelegter Beschleunigungsmesser ist, dass er Signale, die mit der Abbremsung der Masse bei jedem Aufprall verbunden sind, an die programmierbare Verknüpfungssteuerung (44) ausgibt.

6. Vorrichtung für das Verdichten von Boden, wobei die Vorrichtung folgendes umfasst: einen Fallgewichtsbodenverdichter mit einer Masse (28) und Mittel für das wiederholte Anheben der Masse über der Bodenoberfläche und dann deren Fallenlassen, um Stöße auf die Bodenoberfläche auszuüben; **dadurch gekennzeichnet, dass** die Vorrichtung ferner ein Steuermittel in Form einer programmierbaren Verknüpfungssteuerung (44), die mit einer oder mit mehreren vorbestimmten Bodeneigenschaften vorprogrammiert ist, deren Verwirklichung erwünscht ist, sowie einen der Masse zugeordneten Sensor (42) zum Liefern regelmäßiger Hinweise auf eine oder auf mehrere momentane Eigenschaften des Bodens umfasst, wobei die programmierbare Verknüpfungssteuerung so ausgelegt ist, dass sie auf die von dem Sensor gelieferten Hinweise anspricht und die Anzahl nachfolgender Stöße und/oder die bei jedem Stoß auf den Boden ausgeübte Energie und/oder die Häufigkeit der Stöße steuert, um **dadurch** die eine oder mehrere vorbestimmte Bodeneigenschaften im Boden zu verwirklichen.

7. Vorrichtung nach Anspruch 6, welche weiterhin eine geographische Positionsüberwachung umfasst, die mit der programmierbaren Verknüpfungssteuerung (44) verbunden ist, um das Steuermittel Kontrolle über die Verdichtung des Bodens entsprechend einem geographischen Plan ausüben zu lassen.

8. Vorrichtung nach Anspruch 7, **dadurch gekennzeichnet, dass** die geographische Positionsüberwachung ein globales Positionsbestimmungssystem ist.

9. Vorrichtung nach einem der Ansprüche 5 bis 8, **dadurch gekennzeichnet, dass** der Sensor (42) ein so ausgelegter Beschleunigungsmesser ist, dass er Signale, die mit der Abbremsung der Masse bei jedem Aufprall verbunden sind, an die programmierbare Verknüpfungssteuerung (44) ausgibt.

10. Vorrichtung nach einem der Ansprüche 6 bis 9, welche auf einem Fahrzeug angebracht ist.

11. Vorrichtung nach Anspruch 10, **dadurch gekennzeichnet, dass** die Vorrichtung von einer Transportausrichtung, in der sie auf dem Fahrzeug befördert wird, zu einer Arbeitsausrichtung, in der sie neben dem Fahrzeug angeordnet ist, bewegbar ist.

## Revendications

1. Procédé de compactage de terrain, le procédé comprenant les étapes consistant à relever de façon répétée une masse au-dessus de la surface du terrain puis à la laisser choir pour appliquer des impacts sur la surface du terrain, à dériver périodiquement à partir des impacts sur la surface du terrain des indications sur une ou plusieurs propriétés instantanées du terrain, et à contrôler le nombre d'impacts ultérieurs et/ou l'énergie apportée au terrain à chaque impact et/ou la fréquence des impacts, en accord avec la ou les propriétés indiquées, dans lequel un capteur (42) est associé à la masse pour fournir les indications périodiques, et la sortie du capteur est injectée dans un moyen de commande qui comprend un circuit PLC (44) préprogrammé avec une ou plusieurs propriétés prédéterminées du terrain qui doit/doivent être atteinte(s), le circuit PLC fonctionnant automatiquement pour faire varier un ou plusieurs paramètres parmi le nombre d'impacts et/ou l'énergie imposée au terrain à chaque impact et/ou la fréquence des impacts, pour atteindre la ou les propriétés prédéterminées du terrain.

2. Procédé selon la revendication 1, dans lequel des indications sont périodiquement dérivées des propriétés mécaniques ou physiques instantanées du terrain.

3. Procédé selon la revendication 2, dans lequel les propriétés mécaniques du terrain incluent une ou plusieurs propriétés parmi la rigidité du terrain, la résistance du terrain ou la capacité de portage du terrain.

4. Procédé selon la revendication 1, dans lequel des indications sont périodiquement dérivées d'un tassement total ou incrémental du terrain.

5. Procédé selon l'une quelconque des revendications précédentes, dans lequel le capteur (42) et un accéléromètre associé avec la masse et agencé pour délivrer des signaux en relation avec la décélération de la masse à chaque impact vers le circuit PLC (44).

6. Appareil de compactage de terrain, comprenant un compacteur de terrain à masse en chute qui inclut une masse (28) et des moyens pour relever de façon répétée la masse au-dessus de la surface du terrain puis pour la laisser choir pour appliquer des impacts à la surface du terrain ; **caractérisé en ce que** l'appareil comprend aussi un moyen de commande sous la forme d'un circuit PLC (44) qui est programmé avec une ou plusieurs propriétés prédéterminées du terrain que l'on désire obtenir, et un capteur (42) associé avec la masse pour fournir des indications périodiques d'une ou plusieurs propriétés instantanées du terrain, le circuit PLC étant agencé pour réagir aux indications fournies par le capteur et pour commander le nombre d'impacts ultérieurs et/ou l'énergie imposée au sol à chaque impact et/ou la fréquence des impacts, pour assurer ainsi dans le terrain ladite une ou plusieurs propriétés prédéterminées du terrain.

7. Appareil de compactage selon la revendication 6, comprenant également un dispositif de surveillance de position géographique assurant une interface avec le circuit PLC (44) pour permettre au moyen de commande d'exercer une commande sur le compactage du terrain en accord avec un plan géographique.

8. Appareil selon la revendication 7, dans lequel le dispositif de surveillance de position géographique est un système de positionnement GPS.

9. Appareil selon l'une quelconque des revendications 5 à 8, dans lequel le capteur (42) est un accéléromètre agencé pour délivrer des signaux en relation avec la décélération de la masse à chaque impact vers le circuit PLC (44).

10. Appareil selon l'une quelconque des revendications 6 à 9, monté sur un véhicule.

11. Appareil selon la revendication 10, dans lequel l'appareil est mobile depuis une orientation de transport dans laquelle il est porté sur le véhicule vers une position fonctionnelle dans laquelle il est placé le long du côté du véhicule.
